Europäisches Patentamt

European Patent Office

Office européen des brevets

(11) Veröffentlichungsnummer: **0 407 874 B1**

## EUROPÄISCHE PATENTSCHRIFT

(45) Veröffentlichungstag der Patentschrift: **18.01.95**

(51) Int. Cl.$^6$: **A01N 25/30**, A01N 57/20

(21) Anmeldenummer: **90112739.9**

(22) Anmeldetag: **04.07.90**

Die Akte enthält technische Angaben, die nach dem Eingang der Anmeldung eingereicht wurden und die nicht in dieser Patentschrift enthalten sind.

(54) **Entschäumer für flüssige Netzmittel und schaumarme flüssige Pflanzenschutzmittel.**

(30) Priorität: **08.07.89 DE 3922500**
**15.06.90 DE 4019084**

(43) Veröffentlichungstag der Anmeldung:
**16.01.91 Patentblatt 91/03**

(45) Bekanntmachung des Hinweises auf die Patenterteilung:
**18.01.95 Patentblatt 95/03**

(84) Benannte Vertragsstaaten:
**AT BE CH DE DK ES FR GB GR IT LI NL SE**

(56) Entgegenhaltungen:
**DE-A- 2 110 767**
**DE-A- 3 809 159**
**DE-C- 2 233 941**

(73) Patentinhaber: **Hoechst Schering AgrEvo GmbH**
**Gerichtstrasse 27**
**D-13342 Berlin (DE)**

(72) Erfinder: **Albrecht, Konrad, Dr.**
**Sodener Strasse 64**
**D-6233 Kelkheim (Taunus) (DE)**
Erfinder: **Kocur, Jean, Dr.**
**Am Heiligenstock 1**
**D-6238 Hofheim am Taunus (DE)**

EP 0 407 874 B1

**Beschreibung**

Die Erfindung betrifft die Verwendung bestimmter Salze von Perfluoralkylphosphinsäuren und -phosphonsäuren als Entschäumer für Netzmittel, die in Spritzbrühen und konzentrierten Zubereitungen von Pflanzenschutzmittel eingesetzt werden können. Insbesondere betrifft die Erfindung Entschäumer für flüssige herbizide Zubereitungen mit hohen Gehalten an Sulfat- und Sulfonatgruppen enthaltenden Netzmitteln.

Es ist bekannt, daß die Wirkung von Pflanzenschutzmitteln, insbesondere von Blattherbiziden, gesteigert werden kann, wenn den wässrigen Spritzbrühen der Pflanzenschutzmittel vor ihrer Anwendung oberflächenaktive Stoffe, besonders Netzmittel, zugesetzt werden.

Netzmittel erniedrigen die Oberflächenspannung der Spritzbrühe. Dadurch ist eine gleichmäßige Benetzung der Blattoberfläche und damit verbunden oft eine verbesserte Wirkstoffaufnahme gewährleistet.

Aufgrund dieser Eigenschaft hat sich eine große Zahl von Produkten am Markt für Pflanzenschutzmittel etabliert, die als Additive zur Spritzbrühe angeboten werden, und die überwiegend die nichtionogenen Alkylarylpolyglykolether als Netzmittel enthalten (z.B. ®Citowett, ®Triton X45, ®Ortho X-47, ®Agral 90, ®Dash).

Es ist auch bekannt bzw. vorgeschlagen worden, die Wirkung von Herbiziden durch Zusatz von anionischen sulfat- und sulfonatgruppenhaltigen Tensiden zu verstärken; vgl. DE-A 3 035 554, JP-A 86/289004 und Deutsche Patentanmeldung P 38 09 159.3. Hierdurch kann die Anwendung der Herbizide in besonders wirtschaftlicher Weise erfolgen.

Spritzbrühen und flüssige Zubereitungen, die gemäß DE-A 3035554, JP-A 86/289004 und P 38 09 159.3 sehr große Anteile wirkungsverstärkender anionischer Tenside (Netzmittel) enthalten, weisen jedoch oft noch anwendungstechnische Mängel auf.

Werden beispielsweise diese Netzmittel in Form ihrer wäßrigen Lösungen den wäßrigen Spritzbrühen von Pflanzenschutzmitteln zugesetzt, so schäumen diese Spritzbrühen meist so stark, daß unregelmäßige Spritzbeläge auf den Pflanzen und Rückstände von Pflanzenschutzmitteln die Folge sind.

Entsprechende nachteilige Effekte können bei Anwendung der konzentrierten Pflanzenschutzmittelzubereitungen auftreten. Denn, die netzmittelhaltigen konzentrierten Formulierungen werden üblicherweise nicht als solche direkt angewandt, sondern werden je nach Wirkstoff- und Netzmittelkonzentrationen in den Zubereitungen in Mengen von 2 - 10 und mehr Liter pro Hektar zwecks besserer Dosierung und Verteilung erst nach Verdünnen und Verrühren in 50 - 1000 Litern Wasser/ha appliziert. Die nach Verdünnen enthaltenen Spritzbrühen schäumen analog den obengenannten Spritzbrühen meist so stark, daß sie aus dem Spritztank überschäumen und Unregelmäßigkeiten in der Dosierung beim Spritzen zur Folge haben, wodurch nicht nur Verluste am Wirkstoff auftreten, sondern vor allem eine konstante gute Wirkung nicht mehr garantiert werden kann.

Die Verwendung eines Antischaummittels als Additiv, das den Spritzbrühen separat zugesetzt wird, kann oft Abhilfe schaffen. Der Einsatz eines separat zugesetzten Additivs erfordert jedoch neben dem Pflanzenschutzmittel und dem Netzmittel den Gebrauch eines weiteren Mittels und wird in der Praxis wegen der erforderlichen zusätzlichen Dosierung und separaten Lagerhaltung nicht gerne angewendet.

Es besteht daher die Aufgabe Entschäumer für die anionischen sulfat- und sulfonatgruppenhaltigen Netzmittel zu finden, die mit den Netzmitteln gut verträglich, d.h. auch lagerstabil sind, und die eine problemlose Anwendung der Netzmittel in wäßrigen Systemen, insbesondere in Spritzbrühen von Pflanzenschutzmitteln, ermöglichen.

Es besteht weiterhin die Aufgabe, Entschäumer zu finden, die in konzentrierten flüssigen Zubereitungen von Pflanzenschutzmitteln klar löslich sind. Entschäumer, die feste Absätze, ölige Abscheidungen oder deutliche Trübungen ergeben, müssen dabei ausgeschlossen werden, da sie den Eindruck erwecken, daß das Präparat bereits in Zersetzung übergegangen ist. Der aufzufindende Entschäumer muß auch während der Lagerung der Präparate über 2 - 4 Jahre lagerstabil und wirksam bleiben. Der Entschäumer soll zusätzlich so wirksam sein, daß Mengen von bis zu 5 Gew.-%, vorzugsweise 0,1 - 1 Gew.-%, in der Formulierung ausreichen. Größere Mengen an Entschäumer lassen sich oft nur in festen Formulierungen einarbeiten. In wasser- und tensidhaltigen flüssigen Zubereitungen ergeben sich oft Phasentrennungen in tensidarme, wirkstoffreiche und tensidreiche, wirkstoffarme Schichten.

Es ist eine Vielzahl von Entschäumern bekannt, über die z. B. von H.-F. Fink und G. Koerner in "Ullmanns Enzyklopädie der technischen Chemie", 4. neu bearbeitete und erweiterte Auflage, Verlag Chemie, Weinheim, Band 20, Seite 411 - 414 und von W. Schönfeldt in "Grenzflächenaktive Alkylenoxid-Addukte", Wissenschaftliche Verlagsgesellschaft MBM, Stuttgart 1973, Seiten 805 - 853 berichtet wird. Bei der Überprüfung dieser Substanzen wurde gefunden, daß einige wenige wäßrige Zubereitungen von Pflanzenschutzmitteln, die hohe Anteile sulfat- und sulfonatgruppenhaltiger Tenside enthalten, als Entschäu-

EP 0 407 874 B1

mer wirksam sind, aber nur dann, wenn sie separat zu den bereits schäumenden verdünnten wäßrigen Spritzbrühen zugesetzt werden. Von vornherein in den Formulierungen gelöst oder von vornherein mit den sulfat- oder sulfonatgruppenhaltigen Netzmitteln kombiniert als konzentrierte wäßrige Tensidlösung, die einer Spritzbrühe zugesetzt wird, bleiben sie unwirksam, sind unlöslich oder ergeben ölige Abscheidungen oder Trübungen. Die nachträgliche Zugabe von Entschäumern zur Spritzbrühe unabhängig von der Zugabe des Netzmittels oder zur netzmittelhaltigen Spritzbrühe hat aber Nachteile und befriedigt in keiner Weise. Sie erfordert beispielsweise Versand und Handhabung einer zusätzlichen Packung. Ferner wird ein Abmessen der jeweils geeigneten Mengen an Antischaummittel während der Herstellung der Spritzbrühe erforderlich, wenn man zu einer bestimmen Zeit lediglich einen Teil der Packung der flüssigen Herbizid-Formulierung verwenden möchte. Ein weiterer Nachteil ist, daß das Antischaummittel gründlich mit der versprühbaren Zubereitung vermischt werden muß. Die genannten technischen Nachteile werden mit der Erfindung vermieden.

Aus DE-C-2233941 ist bereits bekannt, Perfluoralkinphosphin- und -phosphonsäuren und deren Salze als Entschäumer für wäßrige Lösungen einzusetzen, welche schaumbildende Tenside, einschließlich sulfat- oder sulfonatgruppenhaltige Tenside enthalten.

Gegenstand der Erfindung sind wäßrige Zubereitungen, welche ein anionaktives Netzmittel aus der Gruppe der sulfat- oder sulfonatgruppenhaltigen Tenside (Netzmittel) in Kombination mit einem Tensid (Entschäumer) aus der Gruppe der Salze von Perfluor-($C_6$-$C_{18}$)alkylphosphinsäuren und/oder Perfluor-($C_6$-$C_{18}$)alkylphosphonsäuren mit Alkylaminen, Alkylaminoxethylaten oder Ethylendiaminethoxylaten oder Gemische der Tenside enthalten.

Die erfindungsgemäße Netzmittel/Entschäumer-Kombination kann als konzentrierte wäßrige Lösung vorliegen, die als. Zusatz für Spritzbrühen von Pflanzenschutzmitteln geeignet sind, oder kann in einer wäßrigen konzentrierten Formulierung von Pflanzenschutzmitteln enthalten sein. Das Gewichtsverhältnis von Netzmittel zu Entschäumer ist vorzugsweise von 1 : 1 bis 500 : 1, besonders 10 : 1 bis 200 : 1, insbesondere 20 : 1 bis 120 : 1.

Von besonderem Interesse sind wäßrige Lösungen von Netzmittel und Entschäumer, die im wesentlichen 2 bis 90 Gew.-%, vorzugsweise 20 bis 60 Gew.-%, anionische sulfat- oder sulfonatgruppenhaltige Tenside (Netzmittel) und 0,05 bis 5 Gew.-%, vorzugsweise 0,1 bis 1 Gew.-%, insbesondere 0,2 bis 0,5 Gew.-% der erfindungsgemäßen Salze von Perfluor-($C_6$-$C_{18}$)alkylphosphinsäuren oder Perfluor-($C_6$-$C_{18}$)-alkylphosphonsäuren und Wasser enthalten.

Die zuletzt genannten wäßrigen Lösungen eignen sich als Netzmittel/Entschäumer-Zusatz zu Spritzbrühen von Pflanzenschutzmitteln und bewirken eine Verstärkung der Wirkung der Pflanzenschutzmittel bei problemloser Handhabung der Spritzbrühen.

Als Pflanzenschutzmittel eignen sich beispielsweise Herbizide, Insektizide und Fungizide, vorzugsweise Herbizide.

Herbizide, deren Spritzbrühen mit der erfindungsgemäßen Netzmittel/Entschäumer-Kombination behandelt werden können, sind z.B. Glufosinate, Bialaphos, Glyphosate, Herbizide aus der Reihe der Carbamate, Thiocarbamate, Halogenacetanilide, Imidazolinone, substituierte Phenoxy-, Naphthoxy-, Phenoxyphenoxy-, Benzyloxyphenoxy- und Heteroaryloxyphenoxy-carbonsäurederivate sowie Cyclohexandionderivate, Sulfonylharnstoffherbizide; Heteroaryloxy-phenoxycarbonsäurederivate sind z.B. Chinolyloxy-, Chinoxyloxy-, Pyridyloxy-, Benzoxazolyloxy-, Benzthiazolyloxy-phenoxy-carbonsäureester. Bevorzugt sind Phenoxyphenoxy- und Heteroaryloxyphenoxycarbonsäureester. Als Ester kommen hierbei insbesondere niedere Alkyl-, Alkenyl- und Alkinylester in Frage.

Die erfindungsgemäße Netzmittel/Entschäumer-Kombination kann aber auch in wäßrigen flüssigen Formulierungen der obengenannten Herbizide enthalten sein.

Gegenstand der Erfindung sind deshalb auch flüssige herbizide Zubereitungen, die mindestens
a) einen Herbizid-Wirkstoff, vorzugsweise aus der Gruppe, enthaltend Glufosinate, Bialaphos, Glyphosate, Fenoxaprop-ethyl, Fenoxaprop-P-ethyl, Diclofop-methyl, Isoproturon MCPA, Imazapyr, Imazaquin, Imazethapyr, insbesondere Glufosinate, oder eines seiner Salze,
b) ein anionaktives Netzmittel aus der Gruppe der sulfat- oder sulfonatgruppenhaltigen Tenside,
c) ein Tensid aus der Gruppe der erfindungsgemäßen Salze der Perfluor-($C_6$-$C_{18}$)alkylphosphinsäuren oder -alkylphosphonsäuren mit ($C_1$-$C_{18}$)-Alkylaminen, ($C_1$-$C_{18}$)-Alkylaminoxethylaten oder Ethylendiaminethoxylaten oder Gemische der Tenside und
d) Wasser
enthalten.

Von besonderem Interesse sind erfindungsgemäße konzentrierte Zubereitungen, die mindestens
a) 1 bis 45 Gew.-%, vorzugsweise 5 bis 30 Gew.-% Herbizid-Wirkstoff,
b) 1 bis 50, vorzugsweise 5 bis 35 Gew.-% sulfat- oder sulfonatgruppenhaltiges Tensid,

3

c) 0,05 bis 5 Gew.-%, vorzugsweise 0,05 bis 1 Gew.-%, insbesondere 0,2 bis 0,5 Gew.-%, eines der erfindungsgemäßen Salze der Perfluor-($C_6$-$C_{18}$)alkylphosphin- oder -alkylphosphonsäure oder Gemische davon und

d) Wasser

enthalten.

Die Herbizid-Wirkstoffe werden bevorzugt in Form ihrer bereits erwähnten Salze aus der Gruppe der Alkalimetall-, Ammonium-, niederen oder langkettigen Alkylammonium- und Alkanolammoniumsalze sowie der Salze mit Fettaminethoxylaten eingesetzt. Besonders bevorzugt sind dabei die Natrium-, Ammonium- und Isopropylammoniumsalze.

Die sulfonatgruppen- oder sulfatgruppenhaltigen Tenside werden in der Regel in einer Menge von 0,5 bis 8, vorzugsweise 0,5 bis 5 Gewichtsteilen pro Gewichtsteil der Herbizid-Wirkstoffe eingesetzt und dienen vor allem zur Verbesserung der Wirksamkeit der Herbizide. Beispiele für diese anionaktiven Netzmittel sind in DE-A 3035554, JP-86/289004 und P 3809159.3 beschrieben. Geeignet sind als anionische Netzmittel (b) z. B. ($C_{10}$-$C_{18}$)-Fettalkohol-polyglykolethersulfate, ($C_{10}$-$C_{18}$)-Fettalkylsulfate, ($C_8$-$C_{22}$)-$\alpha$-Olefinsulfonate, ($C_4$-$C_{16}$-Alkyl)-diphenylethersulfonate, ($C_{10}$-$C_{18}$)-Fettalkylsulfonate, ($C_{10}$-$C_{18}$-Fettalkyl)-arylsulfonate, ($C_{10}$-$C_{18}$)-Fettalkoholsulfobernsteinsäurehalbester, ($C_{10}$-$C_{18}$)-Fettalkohol-polyglykolethersulfobernsteinsäureester und deren Salze, wie Alkali-, Ammonium-, Erdalkali-, Alkylammonium- oder Alkanolammoniumsalze, sowie Mischungen der genannten Netzmittel. Besonders geeignet sind ($C_{12}$-$C_{16}$)-Fettalkohol-polyglykol-ethersulfate, vor allem als Alkalimetall- oder Ammoniumsalze. Bei den Netzmitteln mit Polyglykoletherketten sind solche bevorzugt, die klar wasserlöslich sind und einen Ethoxylierungsgrad von 1 bis 200, insbesondere 4 bis 15, aufweisen. Die anionaktiven Netzmittel sind im Handel erhältlich oder können nach bekannten Verfahren hergestellt werden.

Als perfluoralkylgruppenhaltige Tenside (Bestandteil c) eignen sich insbesondere Salze der Perfluor-($C_6$-$C_{12}$)alkylphosphinsäuren oder -phosphonsäuren des Typs der ($C_{10}$-$C_{18}$)-Alkylammoniumsalze sowie Salze mit ($C_{10}$-$C_{18}$)-Alkylaminethoxylaten und Ethylendiaminethoxylaten wie N,N,N',N'-Tetrakis-(2-hydroxypropyl)-ethylendiamin und N,N,N',N'-Tetrakis-(2-hydroxyethyl)-ethylendiamin.

Die perfluoralkylgruppenhaltige Tenside sind Salze von zum Teil im Handel erhältlichen Säuren, z. B. von ®Fluowett PP (Mischung von ($C_6$-$C_{12}$)-Perfluoralkylphosphin- und - phosphonsäuren, Hoechst), und können nach bekannten Methoden hergestellt werden. Die Herstellung der perfluoralkylierten Phosphin- und Phosphonsäuren erfolgt gemäß DE-A 2110767 durch oxidative Hydrolyse von Perfluoralkyldijod- und Bis-(perfluoralkyl)-jodphosphon; die Herstellung der Salze erfolgt durch Neutralisation der so erhaltenen Säuren durch die entsprechenden Hydroxyde oder substituierten Amine in Wasser oder polaren organischen Lösungsmitteln wie z. B. Alkoholen, DMF, NMP, wobei die Salze dann vorzugsweise in gelöster Form eingesetzt werden.

Neben den sulfat- und sulfonatgruppenhaltigen Tensiden und den gefundenen wirkungsvollen perfluoralkylhaltigen Entschäumern können die wäßrigen Lösungen, die Spritzbrühen zugesetzt werden bzw. die pflanzenschutzmittelhaltigen Zubereitungen noch weitere übliche Formulierungshilfsmittel enthalten, wie z.B. nichtionische Tenside der Alkylpolyglykolether-Reihe, z. B. Isotridekanolpolyglykolether, Nonyl- oder Octylphenolpolyglykolether oder Fettaminethoxylate, weitere Frostschutzmittel wie Ethylen- oder Propylenglykol, Propylenglykolmonomethylether, Glycerin, Isopropanol und Harnstoff sowie weitere Dispergiermittel und Emulgatoren, wie sie z. B. in McCutcheon aufgeführt sind, und organische Lösungsmittel und Füllstoffe wie wasserlösliche Stoffe, z. B. Ammoniumsulfat, Harnstoff, Natriumsulfat, Natriumsulfit und Natriumbisulfit.

Konzentrierte Formulierungen enthalten vorzugsweise eines der Herbizide Glufosinate (I), Bialaphos (II), Glyphosate (III), Fenoxaprop-ethyl (IV), Fenoxyprop-P-ethyl (D-Form von (IV)), Diclofop-methyl (V), Isoproturon (VI), MCPA (VII), Imazapyr (VIII), Imazaquin (IX), Imazethapyr (X) oder Gemische aus zwei oder mehreren der genannten Wirkstoffe. Die Verbindungen (I) und (III) bis (X) sind im "Pesticide Manual", 8. Auflage (1987), herausgegeben vom British Crop Protection Council, beschrieben. Die Verbindung (II) (Bialaphos) wird in US-A 4,309,208 beschrieben. Die Wirkstoffe (I) bis (III) und (VII) bis (X) werden in der Regel in Form ihrer Natrium-, Ammonium- und Monoisopropylammoniumsalze angewendet. Praktisch können sie auch in Form anderer Alkalimetallsalze oder niederen Alkyl-oder Alkanolammoniumsalzen Verwendung finden; auch als Salze langkettiger $C_8$-$C_{18}$-Alkylamine oder Fettaminethoxylate (vgl. EP 0290 416 und Deutsche Patentanmeldung P 38 32 147.2) sind sie einzusetzen.

Die erfindungsgemäßen Zubereitungen können zusätzlich auch noch andere Herbizid-Wirkstoffe enthalten, z. B.

f1) weitere wasserlösliche herbizide Wirkstoffe wie solche der Phenoxy-Reihe wie CMPP, MCPA, 2,4-D oder Ioxynil oder Bromoxynil oder deren Salze oder

f2) weitere feste unlösliche Wirkstoffe wie Herbizide der Harnstoff-Reihe wie Diuron, Linuron, Monolinuron, Isoproturon, Thidiazuron und/oder Herbizide der Triazin-Reihe wie Simazin, Atrazin und/oder Sulfonylharnstoffe wie DPX-L-5300, Thiameturonmethyl (DPX-M-6316) und Metsulfuronmethyl (DPX-M 6376) sowie N-Alkoxy- und N-Alkylsulfonylaminosulfonylharnstoffe, wie sie in EP-A 0131258, insbesondere in den Beispielen 17, 18, 19, 20 bis 124 erwähnt sind,

f3) weitere flüssige oder niedrig schmelzende Wirkstoffe wie Alachlor, Metolachlor, Trifluralin, Ester der Phenoxy-Herbizide und Ester von Ioxynil und Bromoxynil.

Hierbei können die Wirkstoffe der Klasse f1) als wäßrige Lösungskonzentrate, die der Klasse f2) in Form von Suspensionskonzentraten formuliert werden, wobei die Konzentrate wasserlösliche Wirkstoffe wie z.B. Wirkstoffe (I) bis (III) in der wäßrigen Trägerphase und die unlöslichen Wirkstoffe als feste Phase in feinster Verteilung enthalten. Die Wirkstoffe der Klasse f3) sind z.B. als Suspoemulsionen zu formulieren, die in der wäßrigen Phase wasserlösliche Wirkstoffe z.B. (I) bis (III) und in der öligen Phase die flüssigen bzw. niedrigschmelzenden Wirkstoffe als solche oder gelöst in üblichen Lösungsmitteln, z. B. aus der Gruppe der aromatischen, ggfs. halogenierten Kohlenwasserstoffe oder aliphatischen Ester oder Ketone enthalten.

Verbindungen der Klasse f2) können mit wasserlöslichen Herbiziden (z.B. Herbizide (I) bis (III)) und den sulfat-und sulfonathaltigen Netzmitteln bisweilen vorteilhaft zu wasserdispergierbaren Granulaten verarbeitet werden. Auch hier wirken die erfindungsgemäß verwendeten perfluoralkylierten Verbindungen als Entschäumer.

Die unter f1), f2) und f3) genannten Wirkstoffe sind zum großen Teil aus dem schon erwähnten "Pesticide Manual" (by the British Crop Protection Council) bekannt. Die Sulfonylharnstoffe DPX-L-5300, DPX-M-6316 und DPX-M-6376 sind in "Farm Chemicals Handbook 89 (Meister Publishing Company, Willoughby, OHIO, 1989) beschrieben.

Die Entschäumer (c) sind auch wirksam, wenn sie in der wäßrigen Wirkstofflösung oder -dispersion in Mengen von vorzugsweise 0,05 bis 5 Gew.-%, besonders 0,05 - 1 Gew.-%, insbesondere 0,2 bis 0,5 Gew.-% gelöst enthalten sind und diese Wirkstofflösung oder -dispersion in Wasser zur Anwendung kommt, wobei der dann verdünnten Lösung vor der Applikation sulfat- und sulfonatgruppenhaltige Tenside (c) und ggfs. andere Hilfsmittel (e), wie z. B. Alkylpolyglykolether oder Fettaminethoxylate separat zugesetzt werden.

Die Entschäumer sind auch wirksam, wenn sie in den Tensiden gelöst in Mengen von vorzugsweise 0,05 - 5 Gew.-%, insbesondere 0,05 - 0,5 Gew.-%, enthalten sind und man ein solches Tensidgemisch den Spritzbrühen flüssiger Formulierungen der herbiziden Wirkstoffe zusetzt.

Gegenstand der Erfindung sind deshalb auch die verdünnten Zubereitungen (Spritzbrühen), die die Bestandteile der obengenannten konzentrierten Zubereitungen in etwa 5 bis 500fach verdünnter Form enthalten.

Gegenstand der Erfindung ist auch das Verfahren zur Herstellung der erfindungsgemäßen Zubereitungen, dadurch gekennzeichnet, daß man die perfluoralkylhaltigen Tenside (c), gegebenenfalls gelöst in Wasser und gegebenenfalls zusammen mit den anionaktiven Netzmitteln (b), mit der wäßrigen Lösung oder Dispersion der Wirkstoffe (a), die gegebenenfalls schon anionaktive Netzmittel (b) und/oder weitere Wirkstoffe (f) und/oder übliche Hilfsmittel (e) enthält, vor oder nach Verdünnen mit Wasser oder ohne Verdünnen mit Wasser vereinigt und erforderlichenfalls noch anionaktive Netzmittel (b) oder restliche Bestandteile zusetzt.

Durch die erfindungsgemäß verwendeten perfluoralkylhaltigen Tenside (c) ist es möglich, die herbizid hochwirksamen Zubereitungen, insbesondere die wäßrigen flüssigen Zubereitungen der wasserlöslichen Wirkstoffe (I), (II) und (III), die wirksame Mengen anionenaktive, sulfat- oder sulfonatgruppenhaltiger Tenside enthalten, mit wirksamen Entschäumern zu versehen. Entpsrechendes gilt für die verdünnten wäßrigen Spritzbrühen. Die herbiziden Mittel können damit für den praktischen Gebrauch auf den Markt gebracht werden.

In den folgenden Beispielen beziehen sich Prozentangaben auf das Gewicht, sofern nichts anderes angegeben ist.

**Schaumtest**

Ein mit Glasstopfen verschließbarer 250 ml Meßzylinder wird mit 190 ml Standardwasser D (342 ppm Härte gemäß CIPAC Handbook I, p 878) gefüllt und mit 10 ml der zu prüfenden Formulierung versetzt.

Der verschlossene Zylinder wird 10 mal um 180° und zurück gedreht. Unmittelbar danach wird eine Stoppuhr angestellt, um die Zeit bis zum Zusammenbruch des Schaumes zu messen.

**Ergebnis:**

Bei Anwendung von Formulierungen, die die erfindungsgemäßen Entschäumer enthalten, verschwinden 90 % des Schaumes innerhalb von 1 min, oft bricht sogar der gesamte Schaum innerhalb von 30 s zusammen.

Bei Anwendung von Formulierungen, die keinen Entschäumer enthalten, bleibt der Schaum oft über 1 h stabil. Anstelle der Perfluoralkyl-phosphinsäure/-phosphonsäure (Fluowet PP) lassen sich diejenigen Salze dieser Säure einsetzen, die eine gute Löslichkeit in Wasser und/oder organischen Lösungsmitteln haben.

Die Salze werden vorteilhaft in gelöster Form mit 0,05 bis 1,0 Gew.-% Säureäquivalent, vorzugsweise mit 0,2 bis 0,5 Gew.-% Säureäquivalent eingesetzt. Sie können aber auch im Zuge des Formulierungsprozesses durch Neutralisation mit den entsprechenden Basen gebildet werden. Mit den in den Beispielen 1 bis 3 hergestellten Salzen von ®Fluowet PP werden Formulierungen hergestellt und entsprechend gute Entschäumerwirkung festgestellt.

**1. Salz des Fluowet PP mit Cocosfettamin + 2 EO**

Zu einer Lösung von
29,50 g Cocosfettamin + 2 EO (EO = Ethylenoxy-Einheit) in
29,50 g Propylenglykolmonomethylether läßt man unter Rühren langsam eine Lösung von
51,90 g Fluowet PP (80%ig in Wasser) in
31,14 g Propylenglykolmonomethylether laufen.
Man erhält so eine Lösung mit 50 Gew.-% des Fluowet PP-Salzes, die einen pH-Wert von 6,9 hat.

**2. Salz des Fluowet PP mit Triethanolamin**

Zu einer Lösung von
51,90 g Fluowet PP (80%ig in Wasser) in
31,14 g Wasser
läßt man unter Rühren langsam eine Lösung von
14,92 g Triethanolamin in
14,92 g Wasser laufen.
Man erhält so eine Lösung mit 50 Gew.-% des Fluowet PP Salzes, die einen pH-Wert von 6,8 hat.

**3. Salz des Fluowet PP mit N,N,N′,N′-Tetrakis-(2-hydroxypropyl)-ethylendiamin***

Zu einer Lösung von
51,90 g Fluowet PP (80%ig in Wasser) und
31,14 g Propylenglykolmonomethylether
läßt man unter Rühren langsam eine Lösung aus
21,90 g HOE S 3528 in
21,90 g Propylenglykolmonomethylether laufen.
Man erhält so eine Lösung mit 50 Gew.-% des Fluowet PP Salzes und einen pH-Wert von 6,4.

**4. Salz des Fluowet PP mit ®Genamin T 150**

Zu einer Lösung von
50,79 g Propylenglykolmonomethylether,
7,57 g Polyethylenglykol 600 und
26,57 g Talgfettaminethoxylat (Genamin T 150)
läßt man unter Rühren langsam
15,07 g Fluowet PP (80 %ig in Waser)
laufen. Es entsteht eine leicht getrübte Lösung mit einem pH-Wert von 6,8. Die Trübung setzt sich nach 24 h Stehen weitgehend ab. Vor dem Zusatz zu wässrigen Tensid-Lösungen wird nochmals kurz aufgerührt.

* HOE S-3528 (Hoechst) oder ®Quadrol L (BASF)

**5. Beispiel zur Entschäumung von Tensid-Lösungen bei deren Anwendung in wäßrigen Spritzbrühen**

Zu 98,72 g $C_{12}$-$C_{14}$-Alkyldiglykolethersulfat-Na (28 % in Wasser ®Genapol LRO flüssig, Hoechst) werden 1,28 g N,N,N',N'-Tetrakis-2-(hydroxypropyl)-ethylendiamin Salz des Fluowet PP, 50 %ig in Propylenglykolmonomethylether aus Beispiel 3 gegeben und kurz gerührt. Es resultiert eine klare Lösung. Verdünnt man in einem 250 ml Standardzylinder 10 g dieser Lösung mit 238 g Wasser und fügt anschließend 2 g Glufosinate-ammonium (50 %ig in Wasser) hinzu, so bricht der nach 10maliger Drehung des verschlossenen Zylinders um 180° und zurück entstandene Schaum innerhalb von 1 min zusammen.

**6. Weitere Beispiele zur Entschäumung von Tensid-Lösungen bei deren Anwendung in wässrigen Spritzbrühen**

**Tensid-Lösung A:**

Zu 98,6 g $C_{12}$-$C_{14}$-Alkyldiglykolethersulfat-Na (28 % in Wasser, ®Genapol LRO flüssig, Hoechst) wurden 1,4 g des Fluowet PP/Genamin T 150-Salzes von Beispiel 4 gegeben. Nach kurzem Rühren resultiert eine klare, anwendungsfertige Lösung.

**Tensid-Lösung B:**

Zu 98,6 g Alpha-Olefinsulfonat-Na (40 % in Wasser, ®Hostapur OS, Hoechst) gibt man 1,4 g des Fluowet PP/Genamin T 150-Salzes von Beispiel 4 und rührt, bis eine homogene Lösung entstanden ist, die eine leichte Trübung aufweist.

**Tensid-Lösung C:**

Zu 98,6 g Alkansulfonat-Na (30 % in Wasser, ®Hostapur SAS, Hoechst) gibt man 1,4 g des Fluowet PP/Genamin T 150-Salzes von Beispiel 4 und rührt kurz, bis eine homogene Lösung entstanden ist, die leicht getrübt ist.

**Tensid Lösung D:**

Zu 98,6 g Isodecylsulfobernsteinsäurehalbester-di-natrium
(30 % in Wasser, ®Netzer iS, Hoechst)
gibt man 1,4 g des Fluowet PP/Genamin T 150-Salzes von Beispiel 4 und rührt kurz nach.
Die Tensid Lösungen wurde mit den Standardformulierungen der Pflanzenschutzmittel

Glufosinate             (®Basta, Hoechst, 200 g Wirkstoff pro Liter)
Fenoxyprop-P-ethyl      (®Puma Super, Hoechst, 75 g Wirkstoff pro Liter)
Isoproturan             (®Arelon flüssig, Hoechst, 500 g Wirkstoff pro Liter)
Diclofopmethyl          (®Illoxan, Hoechst, 378 g Wirkstoff pro Liter)

geprüft, indem jeweils 5 ml der jeweiligen Pflanzenschutzmittelformulierung (PSM) mit je 10 ml Tensid Lösung in einem 250 ml Standardzylinder mit 185 ml Wasser (Standardwasser D nach CIPAC Handbook 1970, S. 878) so gemischt wurde, daß der verschlossene Zylinder 10 mal um 180° und zurück gedreht und die bis zum Zusammenbruch des Schaumes vergangene Zeit gemessen wurde. Die Ergebnisse sind in der folgenden Tabelle zusammengestellt:

| PSM | Tensid-Lösung | | | |
|---|---|---|---|---|
| | A | B | C | D |
| Basta | 45 sec | 2 min | 1 min | 1 min |
| Puma Super | 30 sec | 2 min | 3 min | 30 sec |
| Arelon flüssig | 30 sec | 3 min | 2 min | 1 min |
| Illoxan | 30 sec | 3 min | 1 min | 30 sec |

Aus der Tabelle ist ersichtlich, daß der Schaum innerhalb von 30 sec bis 3 min zusammenbricht.

Wird der Versuch mit den Tensid-Lösungen durchgeführt, die keinen Entschäumer enthalten, so liegt die Zeit bis zum Zusammenbruch des Schaumes meist über 10 min.

13. Entschäumer-Prüfung

Zu einer klaren Lösung, die 20 Gew.-% Glufosinateammoniumsalz und 20 Gew.-% ($C_{12}$-$C_{16}$)-Fettalkoholethersulfat-Na enthält, werden handelsübliche Entschäumer zugegeben. Je nach Wirksamkeit und Löslichkeit werden bis zu 5 Gew.-% Entschäumer zugesetzt, bei Silikonen und fluorierten Substanzen etwa 0,2 bis 0,3 Gew.-%. Die entschäumende Wirkung bzw. das Schaumverhalten wird nach Verdünnen zu einer Spritzbrühe mit 2 Gew.-% Gehalt an Glufosinate-ammonium getestet (s. Tabelle 1). Wie Tabelle 1 zeigt, wirken die Substanzen, die als Entschäumer auf dem Markt angeboten werden, nicht, wenn sie von vornherein in die anionische Tenside enthaltenden Wirkstoffzubereitungen eingearbeitet werden. Außerdem ist die Mehrzahl der Antischaummittel nicht klar löslich. Einige wenige, die löslich sind, verlieren bei der Lagerung der herbiziden Präparate ihre Wirksamkeit. Geprüft werden hierbei bekannte Entschäumer chemisch verschiedener Natur. Da die Lieferanten über die chemische Zusammensetzung nur Hinweise geben, sind in Tabelle 1 die Handelsnamen der Entschäumer, die Hersteller und die Zugehörigkeit zu einer chemischen Gruppe aufgeführt worden.

Als überraschend ist unter anderem festzustellen, daß andere perfluoralkylhaltige Tenside außer den erfindungsgemäßen keine gute Entschäumerwirkung im Test zeigen.

In vergleichenden Versuchen, bei denen Glufosinate-ammonium durch Glyphosate und Bialaphos ersetzt worden ist, werden analog Ergebnisse erhalten.

Tabelle 1    Entschäumer-Prüfung für wäßrige Glufosinate-Formulierungen mit hohen anionaktiven Netzmittelgehalten

| Lfd. Nr. | Handelsname | Lieferant | chem. Wirksubstanz | Löslichkeit in Basta-Forsul | Entschäumende Wirkung nach Lagerung der Formulierung bei 50°C | | | |
|---|---|---|---|---|---|---|---|---|
| | | | | | sofort | 1 Monat | 2 Monate | 3 Monate |
| 1 | Entschäumer TIP | Hoechst AG | Triisobutylphosphat in Isobutanol | trüb | keine | - | - | - |
| 2 | Entschäumer KH | Hoechst AG | nichtionogene Verbindung | klar | keine | - | - | - |
| 3 | Entschäumer SF | Hoechst AG | neutralisiertes Gemisch von Phosphin-phosphonsäuren | klar | keine | - | - | - |
| 4 | Antischaum-pulver SP 3 | Wacker | Siloxan-Basis | klar | gut | - | - | - |
| 5 | Antischaum-pulver SP 8 | Wacker | Siloxan + Polyvinyl-alkohol + Kieselsäure | praktisch unlöslich | gut | gering | ohne Wirkung | - |
| 6 | Schaumstopp | Wacker | Polydimethylsiloxan | trüb | gut | gut | gering | ohne Wirkung |
| 7 | Hoe S 3181 | Hoechst AG | mineralölfreier Ent-schäumer | trüb | keine | | | |
| 8 | Entschäumer STE | Wacker | Polydimethylsiloxan | klar | gut | ohne Wirkung | - | - |
| 9 | Entschäumer SRE | Wacker | Polydimethylsiloxan | klar | gut | gering | ohne Wirkung | |
| 10 | Hoe S 2736 | Hoechst AG | 85 % Polyglykol + Perfluoräthanol + Isononansäureamid | trüb | keine | - | - | - |
| 11 | Entschäumer KS 1 | Hoechst AG | - | klar | keine | - | - | - |

EP 0 407 874 B1

**Tabelle 1, Forts.**

| Lfd. Nr. | Handelsname | Lieferant | chem. Wirksubstanz | Löslichkeit in Basta-Forsul | Entschäumende Wirkung nach Lagerung der Formulierung bei 50°C | | | |
|---|---|---|---|---|---|---|---|---|
| | | | | | sofort | 1 Monat | 2 Monate | 3 Monate |
| 13 | Nopco KX 2 | Diamond Shamrock | Siloxan + aliphat. KW-Stoffe | klar | keine | - | - | - |
| 14 | Nopco NDW | Diamond Shamrock | Siloxan + aliphat. KW-Stoffe | trüb | keine | - | - | - |
| 15 | Antischaum-mittel 5882 | Wacker | Siloxan-Basis | trüb | keine | - | - | - |
| 16 | Antischaum-mittel 5155 | Wacker | Siloxan-Basis | trüb | gut | gut | ohne Wirkung | - |
| 17 | Antischaummittel SLÄ 54289 | Wacker | Siloxan-Basis | klar | gut | gering | ohne Wirkung | - |
| 18 | Entschäumer RD | Dow/Corning | Siloxan-Basis | fast klar | gut | gering | ohne Wirkung | - |
| 19 | RD-Emulsion 500 CC | Dow/Corning | Siloxan-Basis | klar | keine | - | - | - |
| 20 | Entschäumer DB 31 | Dow/Corning | Siloxan-Basis | klar | gut | gut | gering | ohne Wirkung |
| 21 | Entschäumer MSA | Dow/Corning | Siloxan-Basis | trüb | gut | gut | ohne Wirkung | - |
| 22 | Entschäumer DB 100 | Dow/Corning | Siloxan-Basis | trüb | gering | ohne Wirkung | - | - |
| 23 | Entschäumer Q2-3/68 | Dow/Corning | Siloxan-Basis | unlöslich | keine | - | - | - |
| 24 | Surflon S-111 | Asaki Chem. | Perfluoralkylcarbon-säure | klar | keine | - | - | - |
| 25 | Surflon S-112 | Asaki Chem. | Perfluoralkylphosphat | klar | keine | - | - | - |
| 26 | Surflon S-121 | Asaki Chem. | Perfluoralkyltri-methylammonium-Salz | klar | keine | - | - | - |
| 27 | Surflon S-131 | Asaki Chem. | Perfluoralkylbetain | klar | keine | - | - | - |
| 28 | Surflon S-141 | Asaki Chem. | Perfluoralkylpoly-glykoläther | klar | keine | - | - | - |

EP 0 407 874 B1

Tabelle 1, Forts.

| Lfd. Nr. | Handelsname | Lieferant | chem. Wirksubstanz | Löslichkeit in Basta-Forsul | Entschäumende Wirkung nach Lagerung der Formulierung bei 50°C | | | |
|---|---|---|---|---|---|---|---|---|
| | | | | | sofort | 1 Monat | 2 Monate | 3 Monate |
| 29 | Surflon S-145 | Asaki Chem. | Perfluoralkylpoly-glykoläther | klar | keine | - | - | - |
| 30 | K-Palmital | | Seife | trüb | keine | - | - | - |
| 31 | Mg-Stearat | | Seife | trüb | keine | - | - | - |
| 32 | Entschäumer Q 75 | SWS-Silicone's | Siloxan-Basis | praktisch unlöslich | keine | - | - | - |
| 33 | Entschäumer Q 93 | " | Siloxan-Basis | praktisch unlöslich | keine | - | - | - |
| 34 | Entschäumer Q 94 | " | Siloxan-Basis | praktisch unlöslich | keine | - | - | - |
| 35 | Entschäumer Q 101 | " | Siloxan-Basis | praktisch unlöslich | keine | - | - | - |
| 36 | Entschäumer SWS 203 | " | Siloxan-Basis | praktisch unlöslich | keine | - | - | - |
| 37 | Entschäumer SWS 211 | " | Siloxan-Basis | praktisch unlöslich | keine | - | - | - |
| 38 | Entschäumer SWS 213 | " | Siloxan-Basis | praktisch unlöslich | keine | - | - | - |
| 39 | Entschäumer Q2-3241 | Dow Corning | Siloxan-Basis | unlöslich | keine | - | - | - |
| 40 | Entschäumer Q2-3242 | " | Siloxan-Basis | unlöslich | gut | nicht einsetzbar, trüb | | |
| 41 | Entschäumer DB 110 A | " | Siloxan-Basis | trüb | keine | - | - | - |
| 42 | Entschäumer 1520 | " | Siloxan-Basis | trüb | keine | - | - | - |
| 43 | Antimoussol 454 | Rhône Poulenc | Siloxan-Basis | ölige Ab-scheidung | keine | - | - | - |

EP 0 407 874 B1

Tabelle 1, Forts.

| Lfd. Nr. | Handelsname | Lieferant | chem. Wirksubstanz | Löslichkeit in Basta-Forsul | Entschäumende Wirkung nach Lagerung der Formulierung bei 50°C | | | |
|---|---|---|---|---|---|---|---|---|
| | | | | | sofort | 1 Monat | 2 Monate | 3 Monate |
| 44 | Antimoussol 416 | " | Siloxan-Basis | ölige Abscheidung | keine | - | - | - | - |
| 45 | Antimoussol 426 R | " | Siloxan-Basis | ölige Abscheidung | gut | nicht brauchbar | | |
| 46 | Antimoussol 20417 | " | modifiziertes Siliconöl | unlöslich | keine | - | - | - | - |
| 47 | Foammaster D01 | Diamond Shamrock | Silicon-Emulsion | unlöslich | keine | - | - | - | - |
| 48 | Foammaster UD8 | Diamond Shamrock | Silicon-Emulsion | trüb | keine | - | - | - | - |
| 49 | Polysekon 133 | Goldschmidt | Siloxan-Basis | klar | keine | - | - | - | - |
| 50 | Polysekon 720 | Goldschmidt | Siloxan-Basis | klar | keine | - | - | - | - |
| 51 | Beraloid 6420 | Erbslöh | "Polymersubstanz" | klar | keine | - | - | - | - |
| 52 | Beraloid 581 B | Erbslöh | Metallseifen | klar | keine | - | - | - | - |
| 53 | Beraloid 5581 | Erbslöh | kein Siliconöl, sonst keine Angaben | klar | keine | - | - | - | - |
| 54 | Dehypon LT 24 | Henkel | Fettalkohol-AeO-Pyoglykol | klar | keine | - | - | - | - |
| 55 | Dehydran | Henkel | Siloxan-Basis | klar | gut | gering | ohne Wirkung | |
| 56 | Dehydran 131 | Henkel | Mischung v. Fettsäureestern und Siliconöl | trüb | keine | - | - | - | - |
| 57 | Dahydran 240 | Henkel | modifiziertes Polyäthylenglykol | klar | keine | - | - | - | - |
| 58 | Dehydran 242 | Henkel | Siloxan-Basis | klar | keine | - | - | - | - |
| 59 | Dehydran 243 | Henkel | Siloxan-Basis | klar | keine | - | - | - | - |
| 60 | Dehydran 490 | Henkel | "hydroxylgruppenhaltig" | klar | keine | - | - | - | - |

**Tabelle 1, Forts.**

| Lfd. Nr. | Handelsname | Lieferant | chem. Wirksubstanz | Löslichkeit in Basta-Forsul | Entschäumende Wirkung nach Lagerung der Formulierung bei 50°C | | | | |
|---|---|---|---|---|---|---|---|---|---|
| | | | | | sofort | 1 Monat | 2 Monate | 3 Monate | |
| 61 | Cetiol HE | Henkel | unbekannt | klar | keine | - | - | - | - |
| 62 | Versuchs produkt KE 1445 | Henkel | unbekannt | klar | keine | - | - | - | - |
| 63 | Entschäumer KE 1393 | Henkel | Polyglycerin + 22 PgO | klar | keine | - | - | - | - |
| 64 | Entschäumer KE 1102 A | Henkel | unbekannt | klar | keine | - | - | - | - |
| 65 | Entschäumer BE 7249 | Henkel | unbekannt | klar | keine | - | - | - | - |
| 66 | Entschäumer K 975 | Henkel | unbekannt | klar | keine | - | - | - | - |
| 67 | Antimoussol A6 | Sandoz | Glycerindialkyläther | klar | keine | - | - | - | - |
| 68 | Antimoussol WLN | Sandoz | Glycerindialkyläther + Netzmittel | klar | keine | - | - | - | - |
| 69 | Rheolate | unbekannt | unbekannt | trüb | keine | - | - | - | - |
| 70 | Elenor C 22 R | unbekannt | unbekannt | trüb | keine | - | - | - | - |

## Patentansprüche

1. Wäßrige Zubereitungen, welche ein anionaktives Netzmittel aus der Gruppe der sulfat- oder sulfonatgruppenhaltigen Tenside (Netzmittel) in Kombination mit einem Tensid (Entschäumer) aus der Gruppe

13

der Salze Von Perfluor-($C_6$-$C_{18}$)alkylphosphinsäuren und/oder Perfluor-($C_6$-$C_{18}$)alkylphosphonsäuren mit Alkylaminen, Alkylaminoxethylaten oder Ethylendiaminethoxylaten oder Gemische der Tenside enthalten.

2. Wäßrige Zubereitungen nach Anspruch 1, dadurch gekennzeichnet, daß es Netzmittel und Entschäumer im Gewichtsverhältnis 1:1 bis 500:1 enthält.

3. Wäßrige Zubereitung nach Anspruch 1 oder 2, dadurch gekennzeichnet, daß sie im wesentlichen aus 2 bis 90 Gew.-% Netzmittel, 0,05 bis 5 Gew.-% Entschäumer und Wasser besteht.

4. Wäßrige Zubereitung nach Anspruch 1 oder 2, dadurch gekennzeichnet, daß sie eine flüssige herbizide Zubereitung ist, die mindestens
   a) einen Herbizid-Wirkstoff,
   b) ein anionaktives Netzmittel aus der Gruppe der sulfat- oder sulfonatgruppenhaltigen Tenside,
   c) ein Tensid aus der Gruppe der Salze der Perfluor-($C_6$-$C_{18}$)-alkylphosphinsäuren oder -alkylphosphonsäuren mit ($C_1$-$C_{18}$)-Alkylaminen, ($C_1$-$C_{18}$)-Alkylaminoxethylaten oder Ethylendiaminethoxylaten oder Gemische der Tenside und
   d) Wasser
   enthält.

5. Zubereitung nach Anspruch 4, die mindestens
   a) 1 bis 45 Gew.-%, vorzugsweise 5 bis 30 Gew.-% Herbizid-Wirkstoff,
   b) 1 bis 50 Gew.-%, vorzugsweise 5 bis 35 Gew.-% sulfat- oder sulfonatgruppenhaltiges Tensid und
   c) 0,05 bis 5 Gew.-% der Perfluor-($C_6$-$C_{18}$)-alkylphosphin- oder - alkylphosphonsäuresalze oder Gemische davon und
   d) Wasser
   enthält.

6. Zubereitungen nach einem oder mehreren der Ansprüche 1 bis 5, dadurch gekennzeichnet, daß sie als sulfat- oder sulfonatgruppenhaltiges Tensid ($C_{10}$-$C_{18}$)-Fettalkoholpolyglykolethersulfate, ($C_{10}$-$C_{18}$)-Fettalkylsulfate, ($C_8$-$C_{22}$)-$\alpha$-Olefinsulfonate, ($C_4$-$C_{16}$-Alkyl)-diphenylethersulfonate, ($C_{10}$-$C_{18}$)-Fettalkylsulfonate, ($C_{10}$-$C_{18}$)-Fettalkyl-arylsulfonate, ($C_{10}$-$C_{18}$)-Fettalkoholsulfobernsteinsäurehalbester, ($C_{10}$-$C_{18}$)-Fettalkoholpolyglykolethersulfobernsteinsäurehalbester oder deren Salze oder Mischungen der vorstehenden Tenside enthalten.

7. Zubereitungen nach einem oder mehreren der Ansprüche 1 bis 6, dadurch gekennzeichnet, daß sie als perfluoralkylgruppenhaltige Tenside (c) Salze der perfluor-($C_6$-$C_{12}$)-alkylphosphinsäuren oder -alkylphosphonsäuren mit ($C_1$-$C_{18}$)-Alkylaminen, ($C_1$-$C_{18}$)-Alkylaminoxethylaten oder Ethylendiaminoxethylaten oder Mischungen der Tenside enthalten.

8. Zubereitungen nach einem oder mehreren der Ansprüche 1 bis 7, dadurch gekennzeichnet, daß sie Salze der Perfluoralkylphosphinsäuren oder - phosphonsäuren mit ($C_{10}$-$C_{18}$)-Alkylaminen, ($C_{10}$-$C_{18}$)-Alkylaminethoxylaten, N,N,N',N'-Tetrakis-(2-hydroxypropyl)-ethylendiamin oder N,N,N',N'-Tetrakis-(2-hydroxyethyl)-ethylendiamin enthalten.

9. Zubereitungen nach einem oder mehreren der Ansprüche 1 bis 8, dadurch gekennzeichnet, daß sie neben den genannten Bestandteilen weitere übliche Formulierungshilfsmittel, ausgewählt aus der Gruppe nichtionische Tenside, Frostschutzmittel, Dispergiermittel, Emulgatoren, organische Lösungsmittel und Füllstoffe enthalten.

10. Zubereitungen nach einem oder mehreren der Ansprüche 4 bis 9, dadurch gekennzeichnet, daß sie zusätzlich
   f1) wasserlösliche herbizide Wirkstoffe, aus der Phenoxy-Reihe, Ioxynil, Bromoxynil oder deren Salze oder
   f2) feste unlösliche Herbizide aus der Harnstoff-, Triazin- oder Sulfonharnstoffreihe,
   f3) flüssige oder niedrig schmelzende Wirkstoffe aus der Gruppe Alachlor, Metolachlor, Trifluralin, Ester der Phenoxy-herbizide und Ester von Ioxynil und Bromoxynil
   enthalten.

14

**11.** Verfahren zur Herstellung von wäßrigen Zubereitungen nach einem oder mehreren der Ansprüche 3 und 6 bis 9, dadurch gekennzeichnet, daß man das Netzmittel und den Entschäumer in beliebiger Reihenfolge oder gemeinsam, gegebenenfalls mit weiteren üblichen Hilfsstoffen, in Wasser löst.

**12.** Verfahren zur Herstellung der Zubereitungen nach einem oder mehreren der Ansprüche 4 bis 9, dadurch gekennzeichnet, daß man die perfluorhaltigen Tenside (c), gegebenenfalls gelöst in Wasser und gegebenenfalls zusammen mit den anionaktiven Netzmitteln (b), mit der wäßrigen Lösung oder Dispersion der Wirkstoffe (a), die gegebenenfalls schon anionaktive Netzmittel (b) und/oder weitere Wirkstoffe (f) und/oder übliche Hilfsmittel (e) enthält, vor oder nach Verdünnen mit Wasser oder ohne Verdünnen mit Wasser vereinigt und erforderlichenfalls noch anionaktive Netzmittel (b) oder restliche Bestandteile zusetzt.

**13.** Verwendung der Salze von Perfluor-($C_6$-$C_{18}$)-alkylphosphinsäuren oder -alkylphosphonsäuren mit Alkylaminen, Alkylaminoxethylaten oder Ethylendiaminoxethylaten oder Mischungen der vorstehenden Tenside als Entschäumer für sulfat- oder sulfonatgruppenhaltige Tenside in wäßrigen Medien.

**14.** Verwendung nach Anspruch 13, dadurch gekennzeichnet, daß das wäßrige Medium eine flüssige herbizide Zubereitung ist.

**Claims**

**1.** An aqueous preparation which contains an anionic wetting agent from the group comprising the sulfato- or sulfonato-containing surfactants (wetting agents) in combination with a surfactant (defoamer) from the group comprising the salts of perfluoro($C_6$-$C_{18}$)alkylphosphinic acids and/or perfluoro($C_6$-$C_{18}$)-alkylphosphonic acids with alkylamines, alkylamine oxethylates or ethylenediamine ethoxylates, or mixtures of the surfactants.

**2.** An aqueous preparation as claimed in claim 1, containing wetting agent and defoamer in a ratio by weight of 1 : 1 to 500 : 1.

**3.** An aqueous preparation as claimed in claim 1 or 2, composed of essentially 2 to 90 % by weight of wetting agent, 0.05 to 5 % by weight of defoamer and water.

**4.** An aqueous preparation as claimed in claim 1 or 2, which is a liquid herbicidal preparation containing at least
a) a herbicidal active substance,
b) an anionic wetting agent from the group comprising the sulfato- or sulfonato-containing surfactants,
c) a surfactant from the group comprising the salts of perfluoro($C_6$-$C_{18}$)alkylphosphinic acids or -alkylphosphonic acids with ($C_1$-$C_{18}$)alkylamines, ($C_1$-$C_{18}$)alkylamine oxethylates or ethylenediamine ethoxylates, or mixtures of the surfactants, and
d) water.

**5.** A preparation as claimed in claim 4 which contains at least
a) 1 to 45 % by weight, preferably 5 to 30 % by weight, of herbicidal active substance,
b) 1 to 50 % by weight, preferably 5 to 35 % by weight, of sulfato- or sulfonato-containing surfactant, and
c) 0.05 to 5 % by weight of perfluoro($C_6$-$C_{18}$)alkylphosphinic or -alkylphosphonic acid salts or mixtures of these, and
d) water.

**6.** A preparation as claimed in one or more of claims 1 to 5, containing, as sulfato- or sulfonato-containing surfactant, a ($C_{10}$-$C_{18}$)-fatty alcohol polyglycol ether sulfate, a ($C_{10}$-$C_{18}$)-fatty alkyl sulfate, a ($C_8$-$C_{22}$)-$\alpha$-olefin sulfonate, a ($C_4$-$C_{16}$-alkyl)diphenyl ether sulfonate, a ($C_{10}$-$C_{18}$)-fatty alkyl sulfonate, a ($C_{10}$-$C_{18}$)-fatty alkyl arylsulfonate, a ($C_{10}$-$C_{18}$)-fatty alcohol sulfosuccinic monoester, a ($C_{10}$-$C_{18}$)-fatty alcohol polyglycol ether sulfosuccinic monoester, or a salt of these, or a mixture of the above surfactants.

**7.** A preparation as claimed in one or more of claims 1 to 6, containing, as the perfluoroalkyl-group-containing surfactant (c), a salt of perfluoro($C_6$-$C_{12}$)alkylphosphinic acid or -alkylphosphonic acid with a ($C_1$-$C_{18}$)alkylamine, a ($C_1$-$C_{18}$)alkylamine oxethylate or an ethylenediamine oxethylate, or a mixture of the surfactants.

**8.** A preparation as claimed in one or more of claims 1 to 7, containing salts of the perfluoroalkylphosphinic or -phosphonic acids with ($C_{10}$-$C_{18}$)-alkylamines, ($C_{10}$ - $C_{18}$) - alkylamine ethoxylates, N,N,N'N'-tetrakis(2-hydroxypropyl)ethylenediamine or N,N,N'N'-tetrakis(2-hydroxyethyl)ethylenediamine.

**9.** A preparation as claimed in one or more of claims 1 to 8, which contains, in addition to the components mentioned, other customary formulation auxiliaries, selected from the group comprising nonionic surfactants, antifreeze agents, dispersants, emulsifiers, organic solvents and fillers.

**10.** A preparation as claimed in one or more of claims 4 to 9, which additionally contains
f1) a water-soluble herbicidal active substance from the phenoxy series, ioxynil, bromoxynil or a salt of these, or
f2) a solid insoluble herbicide from the urea, triazine or sulfonylurea series,
f3) a liquid active substance, or active substance with a low melting point, from the group comprising alachlor, metolachlor, trifluralin, esters of the phenoxy herbicides and esters of ioxynil and bromoxynil.

**11.** A process for preparing aqueous preparations as claimed in one or more of claims 3 and 6 to 9, which comprises dissolving, in water, the wetting agent and the defoamer in any desired sequence or together and if appropriate with other customary auxiliaries.

**12.** A process for preparing the preparations as claimed in one or more of claims 4 to 9, which comprises combining the perfluoro-containing surfactants (c), optionally dissolved in water and optionally together with the anionic wetting agents (b), with the aqueous solution or dispersion of the active substances (a) which optionally already contains anionic wetting agents (b) and/or other active substances (f) and/or customary auxiliaries (e), before or after it is diluted with water or without dilution with water, and, if required, adding other anionic wetting agents (b) or remaining components.

**13.** The use of a salt of a perfluoro($C_6$-$C_{18}$)alkylphosphinic acid or -alkylphosphonic acid with alkylamines, alkylamine oxethylates or ethylenediamine oxethylates, or a mixture of the above surfactants, as defoamer for a sulfato- or sulfonato-containing surfactant in an aqueous medium.

**14.** The use as claimed in claim 13, wherein the aqueous medium is a liquid herbicidal preparation.

**Revendications**

**1.** Préparations aqueuses qui contiennent un mouillant à anions actifs, choisi dans l'ensemble formé par des tensio-actifs (mouillants) contenant des groupes sulfates ou sulfonates en combinaison avec un tensio-actif (agent de démoussage) choisi dans l'ensemble formé par les sels d'acides perfluoro-alkyl (en $C_8$ -$C_{18}$) phosphiniques et/ou des sels d'acides perfluoro-alkyl (en $C_8$ à $C_{18}$) phosphoniques avec des alkylamines, des éthoxylates d'alkylamines ou des éthoxylates d'éthylène diamines ou des mélanges des tensio-actifs.

**2.** Préparations aqueuses selon la revendication 1, caractérisée en ce qu'elles contiennent un mouillant et un agent de démoussage, présents selon un rapport pondéral de 1:1 à 500:1.

**3.** Préparation aqueuse selon la revendication 1 ou 2, caractérisée en ce qu'elle consiste essentiellement en 2 à 90 % en poids d'un mouillant, 0,05 à 5 % en poids d'un agent de démoussage et en de l'eau.

**4.** Préparation aqueuse selon la revendication 1 ou 2, caractérisé en ce qu'elle est une préparation herbicide liquide qui contient :
a) une substance à activité herbicide,
b) un mouillant à anions actifs, choisi dans l'ensemble formé par des tensio-actifs contenant des groupes sulfates ou sulfonates,

c) un tensio-actif choisi dans l'ensemble formé par les sels d'acides perfluoro-alkyl (en $C_6$ à $C_{18}$)-phosphiniques ou des acides perfluoro-alkyl (en $C_6$ à $C_{18}$)-phosphoniques avec des alkylamines en ($C_1$ à $C_{18}$), des éthoxylates d'alkylamines en ($C_1$ à $C_{18}$) ou des éthoxylates d'éthylène diamine ou des mélanges des tensio-actifs, et

d) de l'eau.

5. Préparation selon la revendication 4, qui contient au moins :

a) 1 à 45 % en poids, avantageusement 5 à 30 % en poids d'une substance à activité herbicide,

b) 1 à 50 % en poids, avantageusement 5 à 35 % en poids, d'un tensio-actif contenant des groupes sulfates ou sulfonates, et

c) 0,05 à 5 % en poids des sels d'acides perfluoro-alkyl (en $C_6$ à $C_{18}$) phosphiniques ou des sels d'acides perfluoro-alkyl ($C_6$ à $C_{18}$) phosphoniques ou leurs mélanges, et

d) de l'eau.

6. Préparations selon une ou plusieurs des revendications 1 à 5, caractérisées en ce qu'elles comportent comme tensio-actifs contenant des groupes sulfates ou sulfonates des [éther polyglycolique d'alcool gras en $C_{10}$-$C_{18}$] sulfates, d'alkyl gras en ($C_{10}$-$C_{18}$) sulfates, des $\alpha$-oléfines (en $C_8$-$C_{22}$) sulfonates, des [éther diphénylique d'alkyle en $C_4$-$C_{16}$]-sulfonates, des alkyl (gras en $C_{10}$-$C_{18}$)-sulfonates, des alkyl gras (en $C_{10}$-$C_{18}$) arylsulfonates, des hémiesters d'alcools gras (en $C_{10}$-$C_{18}$) d'un acide sulfosuccinique, des hémiesters d'éther polyglycolique d'alcool gras (en $C_{10}$-$C_{18}$)- d'acide sulfosuccinique ou leurs sels ou des mélanges des tensio-actifs précités.

7. Préparations selon une ou plusieurs des revendications 1 à 6, caractérisées en ce qu'elles comportent comme tensio-actifs (c) contenant des groupes perfluoro-alkyles des sels d'acides perfluoro-alkyl (en $C_6$ à $C_{12}$)-phosphiniques ou des sels de perfluoro-alkyl (en $C_6$ à $C_{12}$)-phosphoniques avec des alkyl amines en $C_1$ à $C_{18}$), des éthoxylates d'alkylamines en $C_1$-$C_{18}$ ou des éthoxylates d'éthylène diamine ou des mélanges des tensio-actifs.

8. Préparations selon une ou plusieurs des revendications 1 à 7, caractérisées en ce qu'elles contiennent des sels d'acides perfluoro-alkyl-phosphiniques ou d'acides perfluoro-alkyl-phosphoniques avec des alkylamines en ($C_{10}$ à $C_{18}$), des éthoxylates d'alkylamines en $C_{10}$ à $C_{18}$, de la N,N,N',N'-tétrakis-(2-hydroxypropyl)-éthylène diamine ou de la N,N,N',N'-tétrakis-(2-hydroxyéthyl)-éthylène diamine.

9. Préparations selon une ou plusieurs des revendications 1 à 8, caractérisées en ce qu'elles contiennent, en plus du constituant cité, d'autres adjuvants usuels de formulation, choisis dans l'ensemble formé par des tensio-actifs non ioniques, des agents de protection contre le gel, des agents de dispersion, des émulsifiants, des solvants organiques et des charges.

10. Préparations selon une ou plusieurs des revendications 4 à 9, caractérisées en ce qu'elles contiennent en outre,

f1) des substances hydrosolubles à action herbicides, de la série des composés de type phénoxy, loxynil, Bromoxynil ou leurs sels, ou

f2) des herbicides solides insolubles de la série de l'urée, de la triazine ou de la sulfonylurée,

f3) des substances actives liquides ou à bas point de fusion, choisies dans l'ensemble formé par Alachlor, Métolachlor, Trifluralin, des esters d'herbicides du type phénoxy et des esters de loxynil et de Bromoxynil.

11. Procédé de production de préparations aqueuses selon une ou plusieurs des revendications 3 et 6 à 9, caractérisé en ce qu'on dissout le mouillant et l'agent de démoussage, dans un ordre quelconque ou simultanément, éventuellement avec d'autres adjuvants usuels, dans de l'eau.

12. Procédé de production des préparations selon une ou plusieurs des revendications 4 à 9, caractérisé en ce qu'on combine les tensio-actifs perfluorés (c), éventuellement dissous dans de l'eau et éventuellement avec les mouillants à anions actifs (b), avec la solution ou dispersion aqueuse des substances actives (a) qui contient éventuellement déjà du mouillant (b) à anions actifs et/ou d'autre substances actives (1f) et/ou des adjuvants usuels (e), avant ou après dilution avec de l'eau ou sans dilution avec de l'eau, et si nécessaire, on ajoute encore des mouillants à anions actifs (b) ou des constituants restants.

13. Utilisation des sels d'acides perfluoro-alkyl- (en $C_6$ à $C_{18}$) phosphiniques ou d'acides perfluoro-alkyl (en $C_6$ à $C_{18}$)-phosphoniques avec des alkylamines, des éthoxylates d'alkylamines ou des éthoxylates de l'éthylène diamine ou des mélanges des tensio-actifs précités, comme agent de démoussage pour des tensio-actifs contenant des groupes sulfates ou sulfonates dans des milieux aqueux.

14. Utilisation selon la revendication 13, caractérisée en ce que le milieu aqueux est une préparation d'herbicide liquide.